# EUROPEAN PATENT APPLICATION

(11) **EP 4 407 863 A1**
(43) Date of publication of application: **31.07.2024**
(21) Application number: 23218134.7
(22) Date of filing: 19.12.2023
(51) Int. Cl.: H02S 20/20, F24S 25/617, F24S 25/63, F24S 25/65, F24S 25/70, H02S 20/24

(54) **MODULAR BALLAST SYSTEM FOR PHOTOVOLTAIC PANELS**

(30) Priority: 27.01.2023 IT 202300001290
(71) Applicant: Teknomega S.r.l., 20094 Corsico (MI) (IT)
(72) Inventor: CINO, Davide, 20072 PIEVE EMANUELE (MI) (IT); POZZONI, Francesco, 20831 SEREGNO (MB) (IT); FORZINETTI, Elisa, 20151 MILANO (MI) (IT)
(74) Representative: Ottazzo, Marco Francesco Agostino

(57) **Abstract**

A modular ballast system for photovoltaic panels is described, comprising: a substantially flat first ballast component (12), which is provided with connecting means arranged for connection, by stacking, of two or more first ballast components placed one on the top of the other; a second ballast component (22), which is equal to or different with respect to the first ballast component (12), which is provided with connecting means arranged for connection, by stacking, of the second ballast component on the top of a first ballast component, wherein the upper surface of this second ballast component is provided with upper connecting elements (30); at least one support joint (32), which is provided with a first portion for engagement with the upper connecting elements and a second portion arranged for articulated fastening of a photovoltaic panel on the second ballast component; a plurality of reversible connecting and fastening components, which are arranged to engage with both the connecting means of the first ballast component, so as to provide a stable but reversible connection between pairs of first adjacent ballast components, and the connecting means of the second ballast component and the connecting means of the first ballast component placed immediately adjacent below such second ballast component, so as to provide a stable but reversible connection between the second ballast component and the first ballast component placed immediately adjacent below such second ballast component.

## Description

The present invention generally relates to anchoring systems for photovoltaic panels and, more specifically, a modular ballast system that can be used for anchoring photovoltaic panels on flat surfaces.

Specific anchoring systems that can be selected according to the panel (vertical or horizontal) orientation, the panel size, the methods of connecting the panels with each other (gripped on the short or long side) and the panel inclination are known to be used for anchoring photovoltaic panels on flat surfaces, such as the horizontal roofing surfaces of buildings for civil or industrial use. Currently there are various anchoring systems for flat surfaces, which are mainly distinguished by the angle of inclination that the photovoltaic panels must have with respect to the flat surface on which they are installed.

A first type of anchoring system involves an inclination of the photovoltaic panels at 0°. In other words, this type of anchoring system allows the photovoltaic panels to be substantially parallel to the flat support surface. This type of anchoring system comprises one or more substantially flat ballast elements, which are typically manufactured in cement conglomerate. If the weight of the individual ballast elements is not sufficient to guarantee effective anchoring of the photovoltaic panels, the ballast can be increased, for example by adding further ballast elements and connecting them to each other in a horizontal direction. The horizontal connection allows for weight flexibility and to distribute the weight over a larger surface but is usually achieved through the use of elements in the form of linear profiles, which in configurations with large photovoltaic panels, or subject to high loads due to snow/wind can lead to critical mechanical resistance.

Another type of anchoring system involves the photovoltaic panels angle of inclination which is greater than 0° with respect to the flat support surface. This type of anchoring system comprises one or more ballast elements which are shaped in such a way as to provide the photovoltaic panels with the desired inclination with respect to the flat support surface. This type of anchoring system, as an alternative to the ballast elements just described, can also comprise rigid or articulated shaped arms, or triangular supports made with metal profiles and anchored by ballast elements, dowels, or screws.

Technical solutions for inclined configurations, which involve the use of ballast elements or shaped arms, have the same drawbacks already mentioned with reference to the parallel configurations. Added to the drawbacks already mentioned is the need to manage different ballast elements and/or arms according to the orientation, the connection side and the size of the photovoltaic panels. This drawback comes from the need to guarantee that the support surfaces of the single photovoltaic panel are coplanar, consequently the distance between the ballast elements and/or the front and rear arms, if distinct, is constrained and is therefore valid for a limited range of configurations. This drawback also persists for the technical solutions that include a single ballast element with a front and rear support.

The technical solutions that involve the use of triangular supports can be of either the hard type, that is to say only having an angle of inclination, or the flexible type. The flexible solutions benefit from the sliding of the rear cathetus of each triangular support within a predefined range of heights, which corresponds to a respective predefined and discrete range of angles of inclination.

The technical solutions that involve the use of ballasted triangular supports or shaped arms are certainly more flexible than those with shaped ballast elements because they allow the use of flat ballasts, which are cheaper and less specific, but do not solve the problem of the multiplication of the technical solutions according to the orientation, the connection side and the size of the photovoltaic panels. The technical solution that involves the use of doweled triangular supports has the significant advantage of not having to use ballast elements, but rather chemical dowels, which are lighter, cheaper and have high resistance. The drawback shown by the doweled triangular support, however, is the need to have a solid and drillable support surface (it is not suitable, for example, for installation on non-cemented surfaces) and the risk of generating infiltrations. The connection to the ground is made possible through technical solutions using screws.

Moreover, all the technical solutions that involve the use of triangular supports or shaped arms require the use of metal connection profiles, which are more expensive than the ballast elements, they require fine labour for assembly and a check of the structure mechanical resistance. In the event that technical solutions with ballasted triangular supports and/or shaped arms require an increase in ballast, it is also necessary to proceed mainly in the following two ways:
1) adding further metal connection profiles between the supports and increasing the number of the ballast elements between them; or
2) increasing the number of the supports (finer spacing) anchored by means of ballast elements, also increasing the number of the connection profiles of the structure.

The object of the present invention is, therefore, to provide a modular ballast system for photovoltaic panels which is capable of overcoming the above-mentioned drawbacks of the prior art in an extremely simple, economical and particularly functional way.

In detail, it is an object of the present invention to provide a modular ballast system for photovoltaic panels which can create the entire range of the technical solutions for anchoring photovoltaic panels on flat surfaces by using a limited and predefined number of modular components.

A further object of the present invention is to provide a modular ballast system for photovoltaic panels which allows the photovoltaic panels to be positioned according to a wide range of angles of inclination with respect to the flat support surface, that is to say in the optimal positions specified by the manufacturers of the photovoltaic panels.

These and other objects according to the present invention will be achieved by providing a modular ballast system for photovoltaic panels as set forth in claim 1.

Further features of the invention are highlighted by the dependent claims, which are an integral part of the present description.

The modular ballast system for photovoltaic panels according to the present invention comprises a plurality of modular components that can be used for anchoring photovoltaic panels on flat surfaces. This modular ballast system allows the anchoring of photovoltaic panels of any size, orientation, and inclination within a range between 0° and 30°, expandable up to 45°. This modular ballast system also allows the photovoltaic panels to be anchored with a ballast that can be adapted to the specific needs dictated by the installation site (admissible weight of the ballast). Modularity is guaranteed by first substantially flat ballast components, which can be stacked one on the top of the other until the height required by the chosen installation configuration is reached. On the top of the column of first ballast components, or directly on the base plane, second ballast components, whether or not provided with one or more suitably inclined walls are placed which, due to the connection with a joint, allow the photovoltaic panel to be fixed with the desired inclination and guarantee the flatness of the connection between the front ballast, the rear ballast and any intermediate ballast. This modular ballast system allows the necessary weight for the photovoltaic system to be reached by selecting the number of the ballast components, their arrangement (column, pyramid, or other combinations) and their specific weight. The presence of specific connection and fixing components between the various ballast components guarantees the effect of a single and monolithic ballast.

The features and advantages of a modular ballast system for photovoltaic panels according to the present invention will be clearer from the following exemplifying and hence non-limiting description, referring to the attached schematic drawings wherein:
Figure 1 is an axonometric view of a first embodiment of the modular ballast system for photovoltaic panels according to the present invention;
Figure 2 is an axonometric view of a first component of the modular ballast system for photovoltaic panels of Figure 1;
Figure 3 is a side view of the component of Figure 2;
Figure 4 is an enlarged view of the detail indicated by IV in Figure 3;
Figure 5 is an enlarged view of the detail indicated by V in Figure 3;
Figure 6 is an axonometric view of a second component of the modular ballast system for photovoltaic panels of Figure 1;
Figure 7 is a side view of the component of Figure 6;
Figure 8 is an enlarged view of the detail indicated by VIII in Figure 7;
Figure 9 is an enlarged view of the detail indicated by IX in Figure 7;
Figure 10 is an axonometric view of a third component of the modular ballast system for photovoltaic panels of Figure 1;
Figure 11 is a side view of the component of Figure 10;
Figure 12 is an axonometric view of a fourth component of the modular ballast system for photovoltaic panels of Figure 1;
Figure 13 is an axonometric view of a second embodiment of the modular ballast system for photovoltaic panels according to the present invention;
Figure 14 is an axonometric view of a third embodiment of the modular ballast system for photovoltaic panels according to the present invention;
Figure 15 is an axonometric view of a fourth embodiment of the modular ballast system for photovoltaic panels according to the present invention;
Figure 16 is an axonometric view of a fifth embodiment of the modular ballast system for photovoltaic panels according to the present invention;
Figure 17 is a side view of a part of the modular ballast system for photovoltaic panels of Figure 16;
Figure 18 is an axonometric view of a sixth embodiment of the modular ballast system for photovoltaic panels according to the present invention;
Figure 19 is a top plan view of the modular ballast system for photovoltaic panels of Figure 18;
Figure 20 is a sectional view obtained along line XX-XX of Figure 19; and
Figure 21 is a sectional view obtained along line XXI-XXI of Figure 19.

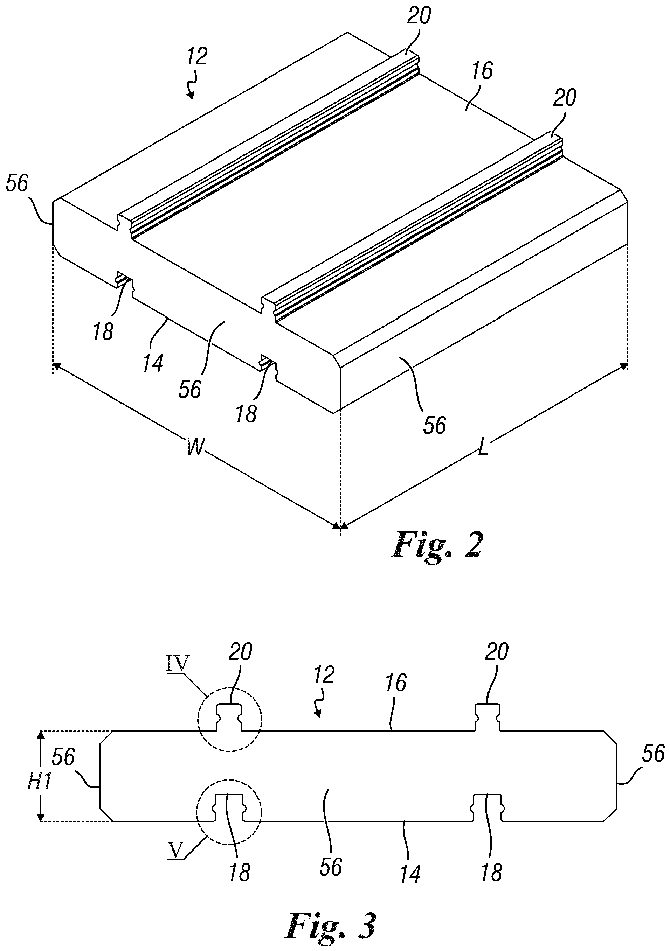

With reference to the Figures, some preferred embodiments of a modular ballast system for photovoltaic panels according to the present invention are shown. The modular ballast system is indicated as a whole with reference number 10. Whatever the embodiment, the modular ballast system 10 comprises (with reference, for example, to Figures 2 and 3) at least one first ballast component 12, which is provided with a substantially flat first lower surface 14 and a first upper surface 16 which is substantially flat and parallel with respect to the first lower surface 14. Each first ballast component 12 is provided with first lower connecting means 18, placed at the first lower surface 14, and first upper connecting means 20, placed at the first upper surface 16. The first lower connecting means 18 and the first upper connecting means 20 are arranged for connecting, by stacking, two or more first ballast components 12 placed one on the top of the other, so that the first lower surface 14 of a first overlying ballast component 12 is in contact with the first upper surface 16 of a first underlying ballast component 12.

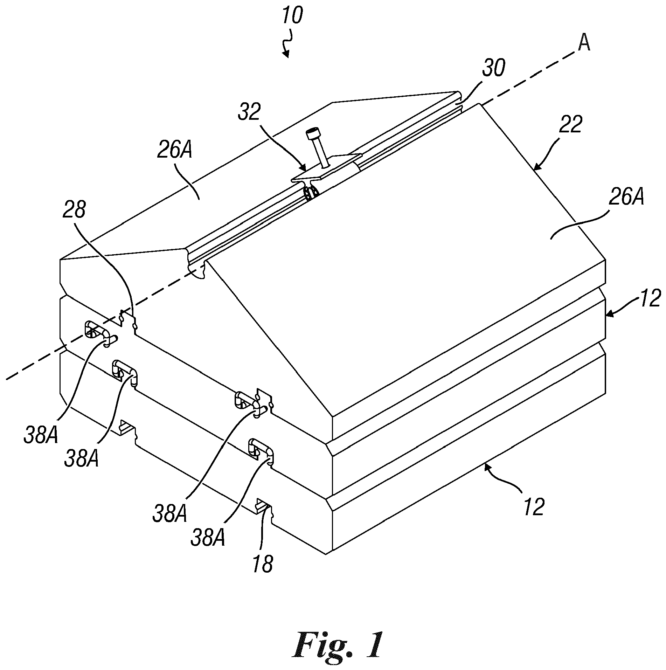

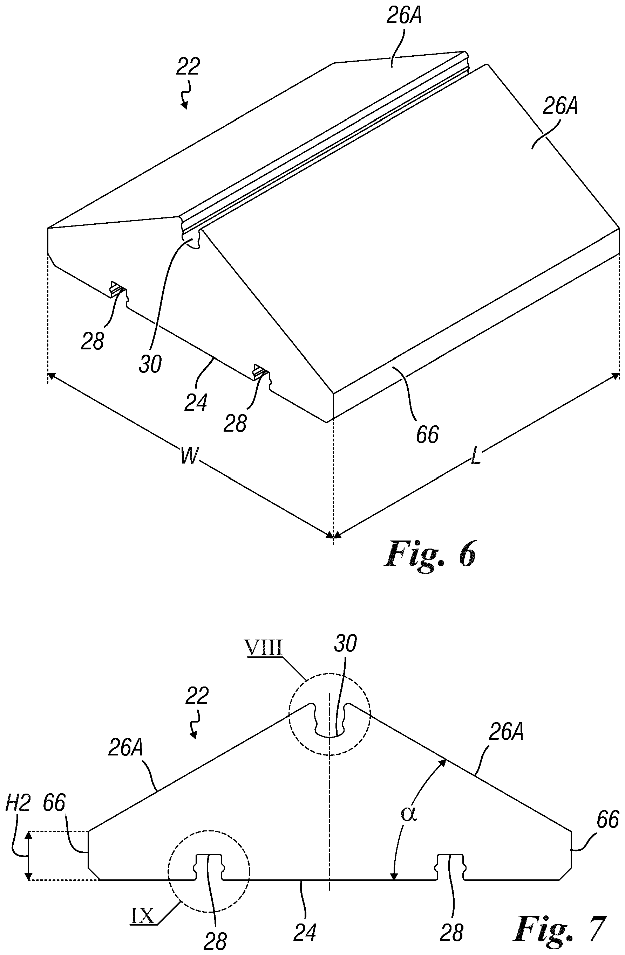

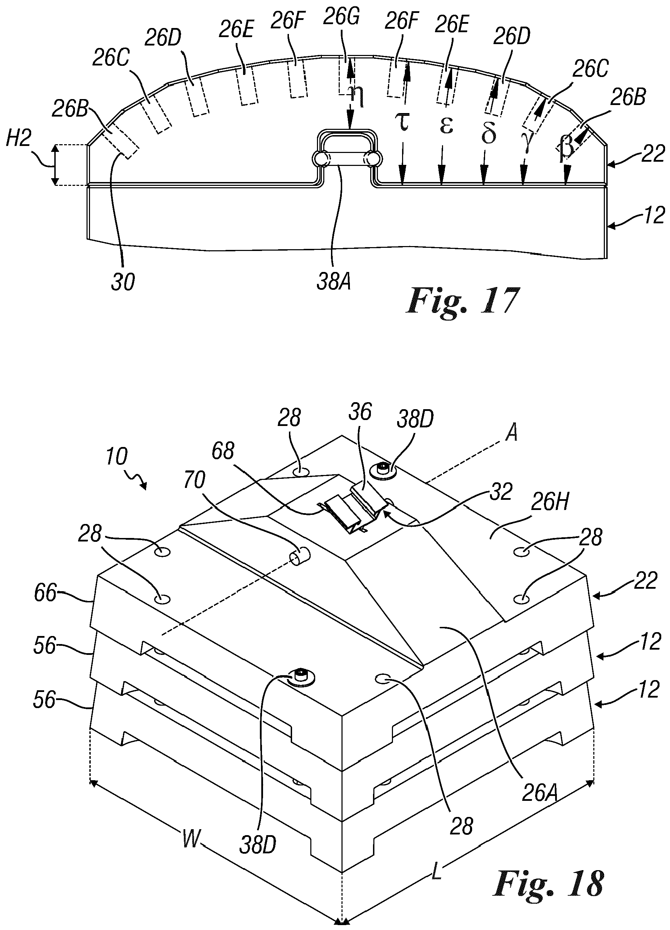

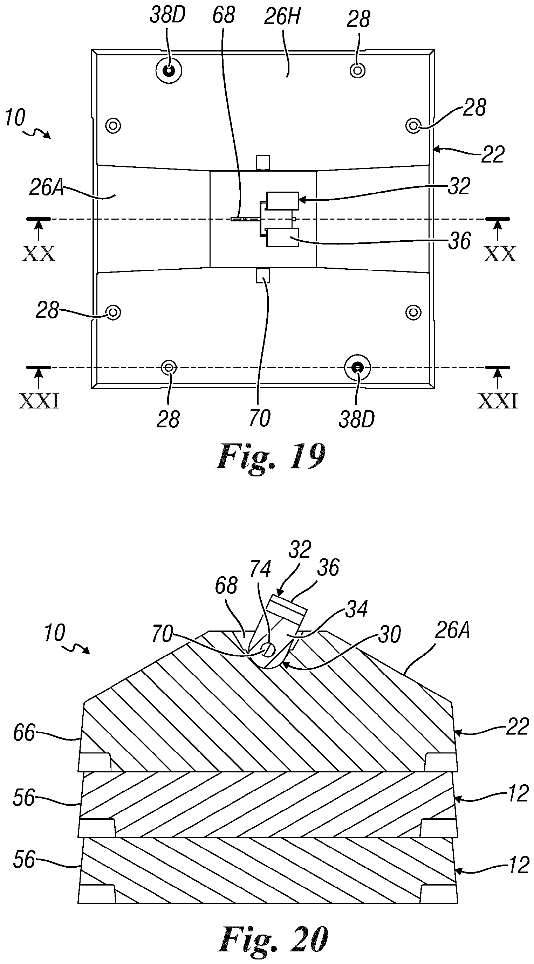

The modular ballast system 10 further comprises (with reference, for example, to Figures 6 and 7) at least one second ballast component 22, which is provided with a substantially flat second lower surface 24 and at least one second upper surface 26A which is arranged to be connected with a joint capable of fastening the photovoltaic panels with an inclination according to at least one respective predefined angle with respect to the second lower surface 24. Each second upper surface can be flat (such as the second upper surface 26H showed in Figures 18 and 19) or inclined according to at least one respective predefined angle α with respect to the second lower surface 24 (such as the second upper surface 26A showed in Figure 1).

Whatever the shape of the respective second upper surfaces, each second ballast component 22 is provided with second lower connecting means 28, which are placed at the second lower surface 24. These second lower connecting means 28 are arranged for connecting, again by stacking, the second ballast component 22 above a first ballast component 12 placed immediately adjacent below such second ballast component 22, so that the second lower surface 24 of the second ballast component 22 is in contact with the first upper surface 16 of the first ballast component 12 placed immediately adjacent below such second ballast component 22. The second upper surface 26A of the second ballast component 22 is also provided with upper connecting elements 30.

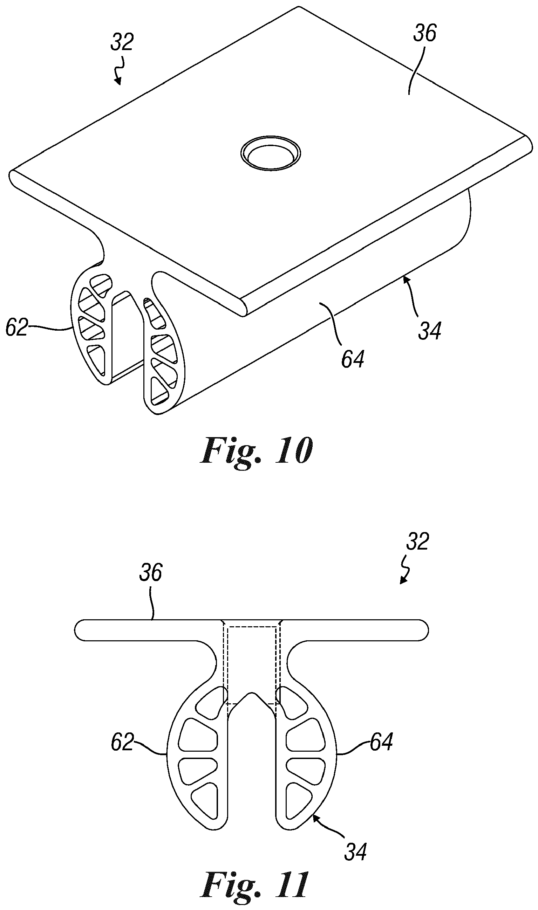

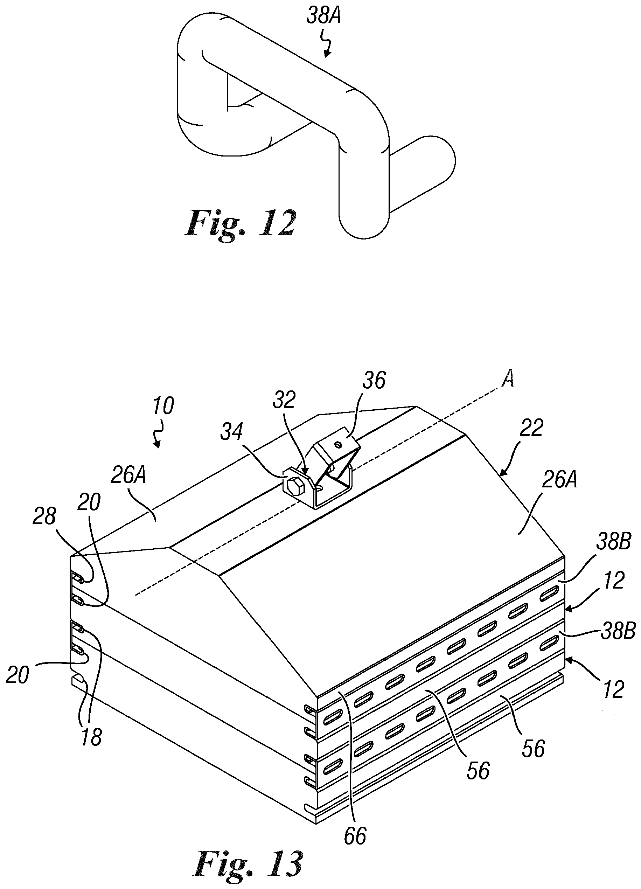

The modular ballast system 10 further comprises (with reference, for example, to Figures 10 and 11) at least one support joint 32, which is provided with a first portion 34 for engagement with the upper connecting elements 30 of the second ballast component 22 and a second portion 36 arranged for articulated fastening of a photovoltaic panel (not shown) on the second ballast component 22. A plurality of reversible connecting and fastening components 38A (one of which is shown, for example, in Figure 12) are finally provided, which are arranged to engage with:
- both the first lower connecting means 18 of a first overlying ballast component 12 and the first upper connecting means 20 of a first underlying ballast component 12, so as to provide a stable but reversible connection between pairs of first adjacent ballast components 12, and
- the second lower connecting means 28 of said second ballast component 22 and the first upper connecting means 20 of a first ballast component 12 placed immediately adjacent below the second ballast component 22, so as to provide a stable but reversible connection between the second ballast component 22 and the first ballast component 12 placed immediately adjacent below the second ballast component 22.

Preferably but not exclusively, each first ballast component 12 has a substantially parallelepiped shape, with a first lower surface 14 and a first upper surface 16 which have a rectangular shape and predefined lengthwise L and widthwise W dimensions (see Figure 2), and with first side surfaces 56 having a predefined height H1 (see Figure 3). Therefore, again preferably, each second ballast component 22 is provided with:
- a second rectangular lower surface 24, having predefined lengthwise L and widthwise W dimensions (see Figure 6) which are compatible with the dimensions of the first lower surface 14 and the first upper surface 16 of each first ballast component 12,
- second side surfaces 66 having a predefined height H2 (see Figure 7), and
- one or more second upper surfaces 26A, which are flat or inclined according to at least one predefined angle α with respect to the second lower surface 24; where a pair of inclined upper surfaces are provided, these can be arranged in a double pitch, wherein the ridgeline A of this double pitch is parallel to the direction of said length L.

With reference in particular to the first embodiment of the modular ballast system 10, shown in Figures 1 to 12, each first lower connecting means 18 and each second lower connecting means 28 of each first ballast component 12 and each second ballast component 22, respectively, consists of a cavity which is obtained on the first lower surface 14 and the second lower surface 24 of the first ballast component 12 and the second ballast component 22, respectively. Each cavity 18, 28 extends longitudinally along at least part of the length L of both the ballast components 12 and 22, preferably along the entire length L of both the ballast components 12 and 22. Accordingly, each first upper connecting means 20 of each first ballast component 12 consists of a protuberance which is obtained on the first upper surface 16 of the first ballast component 12 and extends longitudinally along at least part of said length L the first ballast component 12. Therefore, the connection by stacking of two or more first ballast components 12 placed one on the top of the other, and/or the second ballast component 22 on the top of a first ballast component 12, is obtained by interlocking connection between opposing pairs of cavities 18, 28 and protuberances 20.

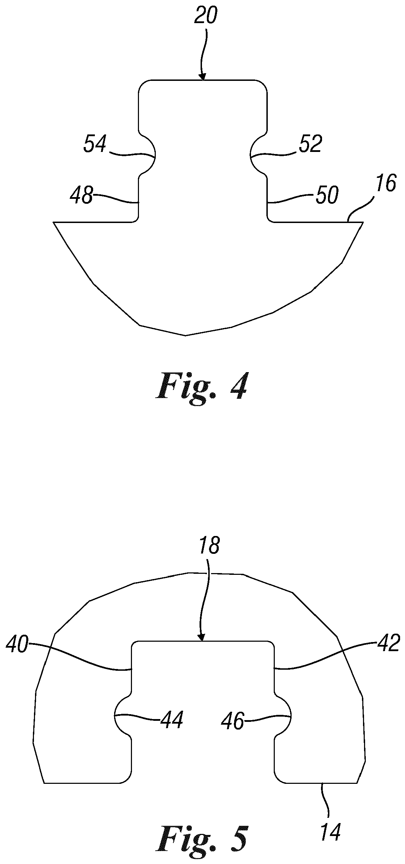

In detail, with particular reference to the enlarged views of Figures 4, 5 and 9, each cavity 18, 28 has a substantially cross-sectional parallelepiped shape and is internally provided, on its own internal walls 40, 42 facing one another and oriented along the direction of said length L, with a pair of first half channels 44, 46 which have a semi-circular cross section and are also oriented along the direction of the length L. Each protuberance 20 also has a substantially cross-sectional parallelepiped shape and is externally provided, on its own opposite external walls 48, 50 oriented along the direction of the length L, with a pair of second half channels 52, 54 with a semi-circular cross section and also oriented along the direction of the length L. The first half channels 44, 46 of each cavity 18, 28 and the second half channels 52, 54 of each protuberance 20 are the same size. Accordingly, the first half channels 44, 46 of each cavity 18, 28 and the second half channels 52, 54 of each protuberance 20, when each cavity 18, 28 and each protuberance 20 are joined in interlocking connection, face each other to form cross-sectional circular channels 44, 54 and 46, 52 which are designed for the introduction of the connecting and fastening components 38A. Each connecting and fastening component 38A, for that purpose, consists of a U-bolt (see Figure 12) which is configured to be inserted into said cross-sectional circular channels 44, 52 and 46, 54. This embodiment is illustrative, but not exhaustive, of the possibilities of joining in interlocking connection the overlapping ballasts one to each other.

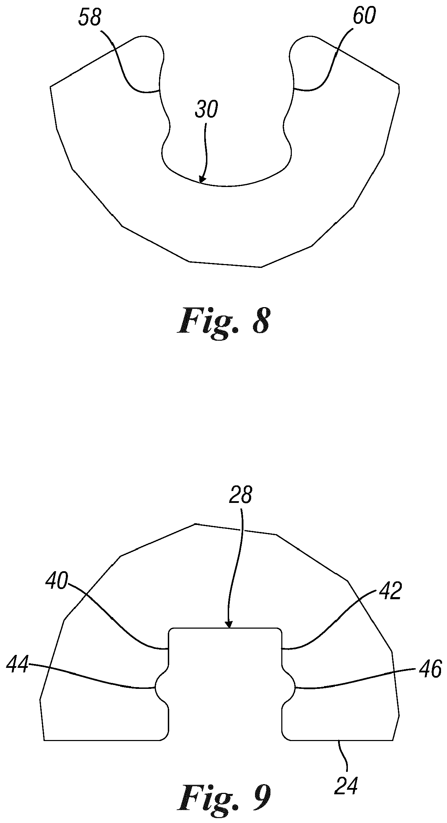

Again with reference to the first embodiment of the modular ballast system 10, shown in Figures 1 to 12, the upper connecting elements 30 of the second ballast component 22 consist of at least one connecting channel open at the top, which is obtained along the ridgeline A and extends longitudinally along at least part of the length L the second ballast component 22, preferably along the entire length L of the second ballast component 22. As shown in the enlarged view of Figure 8, the connecting channel 30 is internally provided with arch-shaped internal walls 58, 60. The first portion 34 of each support joint 32 thus comprises arched walls 62, 64 (see Figures 10 and 11) which engage in interlocking connection with the arch-shaped internal walls 58, 60 of the connecting channel 30, so as to create a rotating coupling, around the ridgeline A, of each support joint 32 with respect to the second ballast component 22.

In Figure 13 a second embodiment of the modular ballast system 10 is shown. This second embodiment differs from the first embodiment of Figures 1 to 12 mainly in that each first lower connecting means 18 and each first upper connecting means 20 consist of a first lower cavity and a first upper cavity, respectively, which are obtained on the first side surface 56, near the first lower surface 14 thereof and the first upper surface 16 thereof. Each second lower connecting means 28 of each second ballast component 22 also consists of a second lower cavity which is obtained on the second side surface 66 of the second ballast component 22, near the second lower surface 24 thereof. Each of the first lower cavity, the first upper cavity and the second lower cavity extends longitudinally along at least part of the length L of the first ballast component 12 and of the second ballast component 22, preferably along the entire length L of the first ballast component 12 and the second ballast component 22. Each connecting and fastening component 38B thus consists of a profile provided with engagement means which are adapted to engage with:
- both the first lower cavity of a first overlying ballast component 12 and the first upper cavity of a first underlying ballast component 12, and
- the second lower cavity of the second ballast component 22 and the first upper cavity of a first ballast component 12 placed immediately adjacent below the second ballast component 22.

Again with reference to the second embodiment of the modular ballast system 10 shown in Figure 13, the first portion 34 of each support joint 32 consists of a first U-shaped plate, which is fastened on the top of the second ballast component 22 at said ridgeline A. The second portion 36 of each support joint 32 also consists of a second U-shaped plate, which is hinged to the first U-shaped plate about a rotation axis parallel to the ridgeline A.

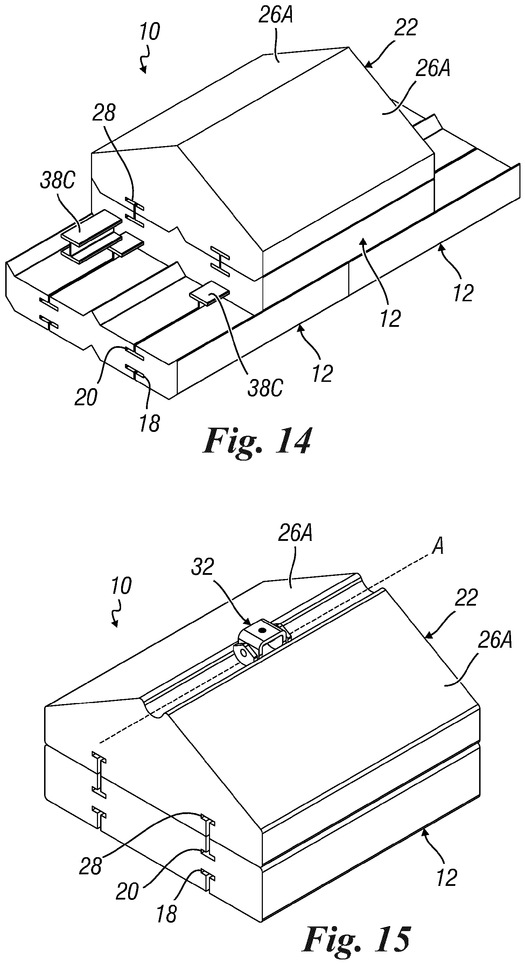

In Figures 14 and 15 a third and a fourth embodiment, respectively, of the modular ballast system 10 are shown. These embodiments differ from the first embodiment of Figures 1 to 12 mainly in that each first lower connecting means 18 of the first ballast component 12, each first upper connecting means 20 of the first ballast component 12 and each second lower connecting means 28 of the second ballast component 22 consist of a cross-sectional T-shaped cavity, respectively, extending longitudinally along at least part of the length L of the first ballast component 12 and the second ballast component 22, preferably along the entire length L of the first ballast component 12 and the second ballast component 22. Therefore, the connection by stacking of two or more first ballast components 12 placed one on the top of the other, and/or of the second ballast component 22 on the top of a first ballast component 12, causes opposite pairs of cross-sectional T-shaped cavities to be placed one on the top of the other, so as to form cross-sectional double T-shaped channels. Each connecting and fastening component 38C consists of a double T-shaped beam arranged to be inserted, by sliding, into a corresponding cross-sectional double T-shaped channel. It is therefore possible, as shown for example in Figure 14, to position two or more first ballast components 12 on the same plane as well as one superimposed on the other.

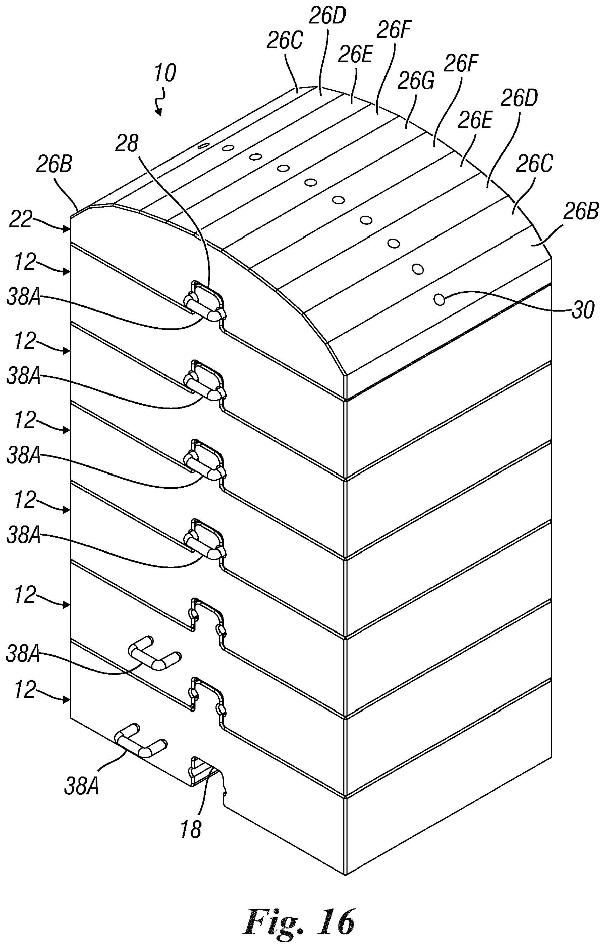

In Figures 16 and 17 a fifth embodiment of the modular ballast system 10 is shown. This fifth embodiment differs from the first embodiment of Figures 1 to 12 mainly in that each second ballast component 22 in addition to having:
- a second rectangular lower surface 24, having predefined lengthwise L and widthwise W dimensions which are identical to the dimensions of the first lower surface 14 and the first upper surface 16 of each first ballast component 12, and
- second side surfaces 66 having a predefined height H2, which are coplanar with respect to the first side surfaces 56 of each first ballast component 12 when the second ballast component 22 is mounted on the top of a first ballast component 12,
is provided with a plurality of second upper surfaces 26B, 26C, 26D, 26E, 26F, 26G, which are inclined at respective predefined angles β, γ, δ, ε, ζ, η but different from each other with respect to the second lower surface 24 of the second ballast component 22 and extend parallel to the direction of the length L.

Again with reference to the fifth embodiment of the modular ballast system 10 shown in Figures 16 and 17, the upper connecting elements 30 of the second ballast component 22 consist of a plurality of blind holes. Each blind hole is obtained on each upper surface of the plurality of second upper surfaces 26B, 26C, 26D, 26E, 26F, 26G of the second ballast component 22. Consequently, each blind hole is inclined with respect to the second lower surface 24 of the second ballast component 22 at the same predefined angle β, γ, δ, ε, ζ, η of the respective upper surface on which this blind hole is obtained. Each blind hole is arranged for insertion of a fastening means, for example a screw or a bolt, which connects to a photovoltaic panel.

In Figures 18 to 21 a sixth embodiment of the modular ballast system 10 is shown. This sixth embodiment differs from the first embodiment of Figures 1 to 12 mainly in that the upper connecting elements 30 of the second ballast component 22 consist of at least one connecting element which is obtained along the ridgeline A and extends longitudinally along at least part of the length L of the second ballast component 22. This connecting elements 30 consists of at least one slot 68, which is obtained on the second ballast component 22, within which the first portion 34 of the support joint 32 can be at least partially inserted, and of a pin 70, which is inserted in both a corresponding first hole 72 obtained on the second ballast component 22, and in at least one corresponding second hole 74 obtained on the first portion 34 of the support joint 32. The rotation of the support joint 32 around the pin 70 allows to create a rotating coupling, around the ridgeline A, of each support joint 32 with respect to the second ballast component 22. In a further embodiment of the modular system 10, not shown in the Figures, the connecting channel could also have a cross-sectional circular shape. Consequently, the first portion 34 of each support joint 32 could have a cross-sectional circular shape which is compatible with the shape of the connecting channel, so as to allow the insertion in interlocking connection of the first portion 34 of each support joint 32 within the connecting channel and create a rotating coupling, around the ridgeline A, of each support joint 32 with respect to the second ballast component 22. The joint can be created by using various methods, for example, as an extruded profile, a rotating concrete cylinder or other solutions.

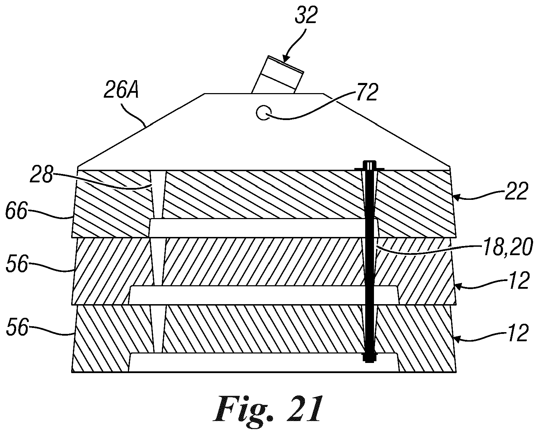

Again with reference to the sixth embodiment of the modular ballast system 10 shown in Figures 18 to 21, each first lower connecting means 18 and each first upper connecting means 20 of each first ballast component 12 consists of a first vertical through hole, which can have a conical (as shown in Figure 21) or a cylindrical cross section and extends perpendicularly through the first lower surface 14 and the first upper surface 16 of the first ballast component 12. Each second lower connecting means 28 of each second ballast component 22 also consists of a second vertical through hole, which can have a conical (as shown in Figure 21) or a cylindrical cross section and which extends in a perpendicular direction through the lower surface 24 of the second ballast component 22, coming out of the second flat upper surface 26H thereof. The connection by stacking of two or more first ballast components 12 placed one on the top of the other, and/or of the second ballast component 22 on the top of a first ballast component 12, therefore causes two or more vertical through holes to be one above the other, so as to form a corresponding continuous series of communicating through holes which vertically pass through the entire ballast modular system 10. Each connecting and fastening component 38D therefore consists of a bolt adapted to engage in a corresponding continuous series of communicating through holes.

Whatever the embodiment of the modular ballast system 10, the first ballast components 12 shall be positioned as simple columns (as shown for example in Figure 16) until the height required is reached if the resulting weight of the entire modular ballast system 10 is sufficient to guarantee the tightness of the photovoltaic system. If the necessary weight were instead greater, the arrangement of the first ballast components 12 could be modified to increase the resistant weight without increasing the height of the entire modular ballast system 10, as shown for example in Figure 14. This aspect is advantageous for a photovoltaic system because the taller a structure is, the more it is subject to destabilizing and potentially damaging wind loads. The connection between the first ballast components 12 of a single column guarantees the effect of a single and monolithic ballast, capable of counteracting wind loads and supporting the photovoltaic panels against snow loads.

With only the first ballast components 12, if they do not have a joint connection, only coplanar photovoltaic systems (panels inclined at 0° and all arranged on the same plane) could be constructed. By adding the second ballast components 22, or by using first ballast components with a predisposed connection to a joint, it is possible instead to construct photovoltaic systems with any inclination of the panels, with angles of inclination between 0° and 45°, preferably between 0° and 30°. The second ballast components 22, which allow each photovoltaic panel to be fixed with the desired inclination and guarantee the flatness of the connection between the front ballast, the rear ballast and any intermediate ballasts are placed on the top of the column of the first ballast components 12, or directly on the base plane. The choice of the inclination within the range between 0° and 30° (possibly expandable up to 45°), which is the inclination range commonly used for installations of photovoltaic panels on flat surfaces, is totally arbitrary due to the support joint 32 which is present on the second ballast component 22. This support joint 32 can be created by using various design solutions and can be either integrated on the second ballast component 22 or added during the installation phase of the modular ballast system 10.

In the event that the second ballast component 22 is placed on the top of a column of the first ballast components 12, the connection will be guaranteed similarly to what happens for two or more first ballast components 12 placed one on top of the other, that is to say by means of an interlocking connection or with joints/connections of various types. Both the first ballast components 12 and the second ballast components 22 can be constructed using any suitable material: in fact, both solid ballast components 12, 22, manufactured for example in concrete, and hollow ballast components 12, 22 can be made and designed to be filled on site with fluids or granular solids of various types. The modular ballast system 10 can be used alone or in combination with carters, in order to reduce wind loads acting on the photovoltaic panels. The weight and dimensions of both the first ballast components 12 and the second ballast components 22 can also be varied and adapted to the individual installation needs of the modular ballast system 10. Purely by way of example, the following indicative data are reported:
- average weight of each first ballast component 12: 25 kg (+/-50%);
- average weight of each second ballast component 22: 36 kg (+/-50%);
- total height of each first ballast component 12: 100mm (+/-50%);
- total height of each second ballast component 22: 140 mm (+/-50%).

It has thus been seen that the modular ballast system for photovoltaic panels according to the present invention achieves the previously highlighted objects. The modular ballast system for photovoltaic panels according to the present invention allows to manage all the inclinations of the photovoltaic panels between 0° and 30° (expandable up to 45°) by using a single articulated assembly of components. This modular ballast system also allows to provide and manage only two types of ballast components (plus any weight variations) to cover the entire range of the installation configurations (inclination, orientation, and connection side of the photovoltaic panels), which otherwise must be managed by customised solutions. The reduction of the range of solutions necessary for fixing the photovoltaic panels makes the modular ballast system according to the invention advantageous both from a strictly economic point of view, reducing the components for which supply and storage must be managed, and from the point of view of ease of installation (universal assembly instructions).

The modular ballast system for photovoltaic panels of the present invention thus conceived is however susceptible of numerous modifications and variations, all of which falling within the same inventive concept; furthermore, all details can be replaced by technically equivalent elements. In practice, the materials used, as well as the shapes and dimensions, can be any according to the technical requirements.

The scope of protection of the invention is therefore defined by the attached claims.

## Claims

1. A modular ballast system (10) for photovoltaic panels comprising:
- at least one first ballast component (12), which is provided with a substantially flat first lower surface (14) and a first upper surface (16) which is substantially flat and parallel with respect to said first lower surface (14), wherein each first ballast component (12) is provided with first lower connecting means (18), placed at said first lower surface (14), and first upper connecting means (20), placed at said first upper surface (16), wherein said first lower connecting means (18) and said first upper connecting means (20) are arranged for connection, by stacking, of two or more first ballast components (12) placed one on the top of the other, so that the first lower surface (14) of a first overlying ballast component (12) is in contact with the first upper surface (16) of a first underlying ballast component (12);
- at least one second ballast component (22), which is provided with a substantially flat second lower surface (24) and at least one second upper surface (26A, 26B, 26C, 26D, 26E, 26F, 26G, 26H) arranged for the connection with a joint capable of fastening the photovoltaic panels with an inclination according to at least one respective predefined angle with respect to said second lower surface (24), wherein each second ballast component (22) is provided with second lower connecting means (28), placed at said second lower surface (24), wherein said second lower connecting means (28) are arranged for connection, by stacking, of said second ballast component (22) above a first ballast component (12) placed immediately adjacent below said second ballast component (22), so that the second lower surface (24) of said second ballast component (22) is in contact with the first upper surface (16) of said first ballast component (12) placed immediately adjacent below said second ballast component (22), and wherein said at least one second upper surface (26A, 26B, 26C, 26D, 26E, 26F, 26G) is provided with upper connecting elements (30);
- at least one support joint (32), which is provided with a first portion (34) for engagement with said upper connecting elements (30) and a second portion (36) arranged for articulated fastening of a photovoltaic panel on said second ballast component (22); and
- a plurality of reversible connecting and fastening components (38A, 38B, 38C, 38D), which are arranged to engage with:
- both the first lower connecting means (18) of a first overlying ballast component (12) and the first upper connecting means (20) of a first underlying ballast component (12), so as to achieve a stable but reversible connection between pairs of adjacent first ballast components (12), and
- the second lower connecting means (28) of said second ballast component (22) and the first upper connecting means (20) of said first ballast component (12) placed immediately adjacent below said second ballast component (22), so as to provide a stable but reversible connection between said second ballast component (22) and said first ballast component (12) placed immediately adjacent below said second ballast component (22).

2. The modular ballast system (10) according to claim 1, **characterized in that** each first ballast component (12) has a substantially parallelepiped shape, with a first lower surface (14) and a first upper surface (16) which have a rectangular shape and predefined lengthwise (L) and widthwise (W) dimensions, and with first side surfaces (56) having a predefined height (H1).

3. The modular ballast system (10) according to claim 2, **characterized in that** each second ballast component (22) is provided with:
- a second rectangular lower surface (24), with predefined lengthwise (L) and widthwise (W) dimensions which are compatible with the dimensions of said first lower surface (14) and said first upper surface (16);
- second side surfaces (66) having a predefined height (H2); and
- a pair of second upper surfaces (26A), which are both inclined at the same predefined angle (α) with respect to said second lower surface (24) but which are arranged in a double pitch, wherein the ridgeline (A) of said double pitch is parallel to the direction of said length (L).

4. The modular ballast system (10) according to claim 3, **characterized in that** each first lower connecting means (18) and each second lower connecting means (28) consists of a cavity (18; 28) which is obtained on said first lower surface (14) and said second lower surface (24), respectively, wherein each cavity (18; 28) extends longitudinally along at least part of said length (L), and **in that** each first upper connecting means (20) consists of a protuberance which is obtained on said first upper surface (16) and extends longitudinally along at least part of said length (L), so that the connection by stacking of two or more first ballast components (12) placed one on the top of the other, and/or said second ballast component (22) on the top of a first ballast component (12), is obtained by interlocking connection between opposing pairs of cavities (18; 28) and protuberances (20).

5. The modular ballast system (10) according to claim 4, **characterized in that** each cavity (18; 28) has a substantially cross-sectional parallelepiped shape and is internally provided, on its own internal walls (40, 42) facing one another and oriented along the direction of said length (L), with a pair of first half channels (44, 46) with a semi-circular cross section and also oriented along the direction of said length (L), and **in that** each protuberance (20) has a substantially cross-sectional parallelepiped shape and is externally provided, on its own opposite external walls (48, 50) and oriented along the direction of said length (L), with a pair of second half channels (52, 54) with a semi-circular cross section and also oriented along the direction of said length (L), wherein the first half channels (44, 46) of each cavity (18; 28) and the second half channels (52, 54) of each protuberance (20) are the same size, wherein the first half channels (44, 46) of each cavity (18; 28) and the second half channels (52, 54) of each protuberance (20), when said cavity (18; 28) and said protuberance (20) are joined in interlocking connection, face each other to form cross-sectional circular channels (44, 54; 46, 52) which are adapted to introduce said connecting and fastening components (38A), and wherein each connecting and fastening component (38A) consists of a U-bolt configured to be inserted into said cross-sectional circular channels (44, 52; 46, 54).

6. The modular ballast system (10) according to any claims 3 to 5, **characterized in that** said upper connecting elements (30) consist of at least one connecting channel open at the top, which is obtained along said ridgeline (A) and which extends longitudinally along at least part of said length (L), wherein said connecting channel (30) is internally provided with arch-shaped internal walls (58, 60), and wherein said first portion (34) of each support joint (32) comprises arched walls (62, 64) which engage in interlocking connection with the arch-shaped internal walls (58, 60) of said connecting channel (30), so as to create a rotating coupling, around said ridgeline (A), of said support joint (32) with respect to said second ballast component (22).

7. The modular ballast system (10) according to claim 3, **characterized in that** each first lower connecting means (18) and each first upper connecting means (20) consist of a first lower cavity and a first upper cavity, respectively, which are obtained on said first side surface (56), near said first lower surface (14) and said first upper surface (16), respectively, and **in that** each second lower connecting means (28) consists of a second lower cavity which is obtained on said second side surface (66), near said second lower surface (24), wherein each of said first lower cavity, first upper cavity and second lower cavity extends longitudinally along at least part of said length (L), and wherein each connecting and fastening component (38B) consists of a profile provided with engagement means which are adapted to engage with:
- both the first lower cavity of a first overlying ballast component (12) and the first upper cavity of a first underlying ballast component (12), and
- the second lower cavity of said second ballast component (22) and the first upper cavity of said first ballast component (12) placed immediately adjacent below said second ballast component (22).

8. The modular ballast system (10) according to any claims 3 to 7, **characterized in that** said first portion (34) of each support joint (32) consists of a first U-shaped plate, which is fastened on the top of said second ballast component (22) at said ridgeline (A), and **in that** said second portion (36) of each support joint (32) consists of a second U-shaped plate, which is hinged to said first U-shaped plate about a rotation axis parallel to said ridgeline (A).

9. The modular ballast system (10) according to claim 3, **characterized in that** each first lower connecting means (18), each first upper connecting means (20) and each second lower connecting means (28) consist of a cross-sectional T-shaped cavity, respectively, extending longitudinally along said length (L), so that the connection by stacking of two or more first ballast components (12) placed one on the top of the other, and/or of said second ballast component (22) on the top of a first ballast component (12), causes opposing pairs of cross-sectional T-shaped cavities to be placed one on the top of the other, so as to form cross-sectional double T-shaped channels, wherein each connecting and fastening component (38C) consists of a double T-shaped beam arranged to be inserted, by sliding, into a corresponding cross-sectional double T-shaped channel.

10. The modular ballast system (10) according to claim 2, **characterized in that** each second ballast component (22) is provided with:
- a second rectangular lower surface (24), having predefined lengthwise (L) and widthwise (W) dimensions which are compatible with the dimensions of said first lower surface (14) and said first upper surface (16);
- second side surfaces (66) having a predefined height (H2); and
- a plurality of second upper surfaces (26B, 26C, 26D, 26E, 26F, 26G), which are inclined at respective predefined angles (β, γ, δ, ε, ζ, η) but different from each other with respect to said second lower surface (24) and which extend parallel to the direction of said length (L).

11. The modular ballast system (10) according to claim 10, **characterized in that** said upper connecting elements (30) consist of a plurality of blind holes, wherein each blind hole is obtained on each upper surface of said plurality of second upper surfaces (26B, 26C, 26D, 26E, 26F, 26G), wherein each blind hole is inclined with respect to said second lower surface (24) at the same predefined angle (β, γ, δ, ε, ζ, η) of the respective upper surface on which said blind hole is obtained, and wherein each blind hole is arranged for insertion of a fastening means which connects to a photovoltaic panel.

12. The modular ballast system (10) according to claim 3, **characterized in that** each of said upper connecting elements (30) is obtained along said ridgeline (A) and extends longitudinally along at least part of said length (L), wherein each of said upper connecting elements (30) consists of at least one slot (68), which is obtained on said ballast component (22) and within which said first portion (34) of each support joint (32) can be at least partially inserted, and of a pin (70), which is inserted in both a corresponding first hole (72) obtained on said ballast component (22), and in at least one corresponding second hole (74) obtained on said first portion (34) of each support joint (32), so that the rotation of each support joint (32) around said pin (70) allows to create a rotating coupling, around said ridgeline (A), of said support joint (32) with respect to said second ballast component (22).

13. The modular ballast system (10) according to claim 3, **characterized in that** said upper connecting elements (30) consist of at least one connecting channel open at the top, which is obtained along said ridgeline (A) and which extends longitudinally along at least part of said length (L), wherein said connecting channel has a cross-sectional circular shape, and wherein said first portion (34) of each support joint (32) has a cross-sectional circular shape which is compatible with the shape of said connecting channel, so as to allow the insertion in interlocking connection of said first portion (34) within said connecting channel and create a rotating coupling, around said ridgeline (A), of said support joint (32) with respect to said second ballast component (22).

14. The modular ballast system (10) according to claim 12 or 13, **characterized in that**:
- each first lower connecting means (18) and each first upper connecting means (20) consists of a first vertical through hole, which extends perpendicularly through said first lower surface (14) and said first upper surface (16); and
- each second lower connecting means (28) consists of a second vertical through hole, which extends in a perpendicular direction through said first lower surface (14), coming out of said second upper surface (26A),
such that the connection by stacking of two or more first ballast components (12) placed one on the top of the other, and/or of said second ballast component (22) on top of a first ballast component (12), causes two or more vertical through holes to be one above the other, so as to form a corresponding continuous series of communicating through holes which vertically pass through said ballast modular system (10), and wherein each connecting and fastening component (38D) consists of a bolt adapted to engage in a corresponding continuous series of communicating through holes.
